Europäisches Patentamt

European Patent Office

Office européen des brevets

(19)

(11) Veröffentlichungsnummer: **0 002 693**
**B1**

(12) **EUROPÄISCHE PATENTSCHRIFT**

(45) Veröffentlichungstag der Patentschrift:
27.01.82

(51) Int. Cl.³: **H 04 B 3/04,** H 04 L 25/00

(21) Anmeldenummer: **78101581.3**

(22) Anmeldetag: **06.12.78**

(54) Verfahren zur Verzerrungsarmen Übertragung breitbandiger Signale über symmetrische oder unsymmetrische Leitungen.

(30) Priorität: **29.12.77 DE 2758716**

(43) Veröffentlichungstag der Anmeldung:
**11.07.79 Patentblatt 79/14**

(45) Bekanntmachung des Hinweises auf die Patenterteilung:
**27.01.82 Patentblatt 82/4**

(84) Benannte Vertragsstaaten:
**BE CH DE FR GB LU NL SE**

(56) Entgegenhaltungen:
**GB-A-1 523 405**
**GRUNDIG TECHNISCHE INFORMATIONEN**
**Band 22, No. 1, 1975 Fürth (DE)**
**BEEKMANN: »Die Übertragung von Impulsen über koaxiale Leitungen« Seiten 495—501**

(73) Patentinhaber: **GRUNDIG E.M.V. Elektro-Mechanische Versuchsanstalt Max Grundig, Kurgartenstrasse 37, D-8510 Fürth (DE)**

(72) Erfinder: **Beekman, Erich, Zirndorfer Strasse 13, D-8501 Weiherhof (DE)**

(74) Vertreter: **Voigt, Günter, Kurgartenstrasse 37, D-8510 Fürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur verzerrungsarmen Übertragung breitbandiger Signale über symmetrische oder unsymmetrische Leitungen

Die Erfindung bezieht sich auf ein Verfahren zur verzerrungsarmen Übertragung breitbandiger Signale über symmetrische oder unsymmetrische Leitungen.

Breitbandige Signale, insbesondere Fernsehsignale, können in ihrer ursprünglichen Frequenzlage, d. h. mit einer relativen Bandbreite von bis zu $1 : 10^7$, über symmetrische oder unsymmetrische Leitungen übertragen werden. Dazu sind Sende- und Empfangs- und gegebenenfalls Zwischenverstärker erforderlich, die die bei der genannten Bandbreite stark frequenzabhängige Leitungsdämpfung ausgleichen und die die zu übertragenden Signale an Übertragungsleitungen anpassen.

Bei der Entzerrung relativ langer Leitungsabschnitte bzw. bei der Entzerrung von Leitungen mit relativ hohem Längswiderstand ergeben sich Schwierigkeiten im tieffrequenten Übertragungsbereich, die offenbar nicht allein auf den Frequenzgang der Leitungsdämpfung zurückzuführen sind. Bei der Übertragung ausreichend langer Sprungsignale treten Verzerrungen auf, die durch eine frequenzabhängige Verstärkung kaum auszugleichen sind. Es besteht daher der Wunsch, durch besondere schaltungstechnische Maßnahmen eine möglichst ungestörte Übertragung beliebig langer Sprungsignale auch über längere bzw. mit größerem Längswiderstand behaftete Leitungen zu ermöglichen.

Die verlustbehaftete Leitung wird stets als eine Kettenschaltung von Induktivitäten und ohmschen Widerständen mit Querkapazitäten und Querwiderständen dargestellt. Genaue Messungen haben gezeigt, daß die verlustlosen Elemente (Längsinduktivitäten und Querkapazitäten) die Wellenausbreitung bewirken, während die Verlustelemente (Längs- und Querwiderstände) Reflexionen hervorrufen. Nur wenn die durch den Längswiderstand hervorgerufenen positiven Reflexionen genauso groß sind wie die durch die Querleitungen hervorgerufenen negativen Reflexionen, erzeugt die Leitung selber keine nach außen meßbaren Reflexionen.

In der Zeitschrift Grundig technische Informationen, Band 22, Nr. 1, 1975, Seiten 495 bis 501 wird der zeitliche Verlauf von Leitungseingangs- und Leitungsausgangsspannung bei Leerlauf am Leitungsausgang und beliebigem Generatorinnenwiderstand diskutiert. Wegen des Leerlaufs am Leitungsausgang bezieht sich die erwähnte negative Reflexion nicht auf eine verzerrungsarme Übertragung.

Die doppelte Reflexion ist allgemein und auch aus dem oben erwähnten Artikel bekannt, sie wird jedoch als vernachlässigbar klein hingestellt (Seite 496, rechts unten).

Bei wirklichen Leitungen überwiegt in dem betrachteten Frequenzbereich der Einfluß des Längswiderstandes. Eine sich in der Leitung ausbreitende Welle erzeugt durch Reflexionen am Längswiderstand eine rücklaufende Welle.

Je größer der Längswiderstand ist — lange Leitung bzw. relativ kurze Leitung mit hohem Widerstandsbelag — um so stärker machen sich doppelte Reflexionen, d. h. Reflexionen der am Widerstandsbelag erzeugten rücklaufenden ersten Teilwelle, die eine zum Leitungsende hin laufende zweite Teilwelle erzeugen, störend bemerkbar.

Am Ende einer tatsächlichen Übertragungsleitung überlagern sich Verzerrungen, die durch den Frequenzgang der Leitungsdämpfung hervorgerufen werden, mit Verzerrungen, die durch die unvermeidlichen Reflexionen am Leitungslängswiderstand entstehen.

Der Erfindung liegt die Aufgabe zugrunde, ein Übertragungssystem zu schaffen, durch das störende Verzerrungen praktisch ausgeschaltet werden.

Die Lösung dieser Aufgabe erfolgt durch die im kennzeichnenden Teil des Anspruchs 1 angegebenen Maßnahmen.

Vorteilhafte Weiterbildungen ergeben sich aus den Unteransprüchen.

Die Erfindung wird nachfolgend beispielsweise näher erläutert:

Wie bereits eingangs erwähnt wurde, wird das Verhalten von Übertragungsleitungen für breitbandige Signale mit Hilfe bestimmter Ersatzschaltbilder dargestellt. Solche Ersatzschaltbilder geben aber offenbar das komplexe Verhalten solcher Übertragungsleitungen nur unzureichend wieder.

Wegen der vielfältigen Störeinflüsse, die insbesondere bei Verwendung langer Leitungen bzw. relativ kurzer Leitungen mit hohem Widerstandsbelag auftreten, konnten über solche Leitungen bisher nur Breitbandsignale übertragen werden, wenn die Qualitätsanforderungen relativ gering waren. Der Erfindung liegt die Erkenntnis zugrunde, daß Störeinflüsse auch durch die doppelte Reflexion einer in einer Leitung von einem Sender zu einem Empfänger laufenden Welle am Leitungslängswiderstand hervorgerufen werden. Die so entstehenden Teilwellen führen nach dem Eintreffen der Hauptwelle am Empfängereingang zu einer Beeinflussung der Empfängereingangsspannung. Diese an sich unerwünschten Teilwellen werden erfindungsgemäß durch gegenphasige Teilwellen möglichst vollständig ausgeglichen, die ihrerseits durch bewußt erzeugte und entsprechend dimensionierte negative Reflexionen erzeugt werden.

Die bewußt erzeugten gegenphasigen Teilwellen können beispielsweise durch eine entsprechend gewählte negative Reflexion der ersten rücklaufenden Teilwelle am Senderinnenwiderstand erzeugt werden. Sie können aber auch durch eine entsprechend gewählte negative Reflexion der Hauptwelle am Empfängereingangswiderstand mit anschließender positiver Reflexion am Leitungslängswiderstand erzeugt

werden. Selbstverständlich sind auch Kombinationen der oben erwähnten negativen Reflexionen am Senderinnenwiderstand und Empfängereingangswiderstand möglich.

Bei der Zusammenschaltung von Leitungsabschnitten mit unterschiedlichem Widerstandsbelag können die gegenphasigen Teilwellen insbesondere durch passend gewählte negative Reflexionen an Leitungseingang und/oder Leitungsausgang und/oder an den Verbindungspunkten der einzelnen Leistungsabschnitte erzeugt werden.

Die Praxis hat gezeigt, daß es von besonderem Vorteil ist, wenn der Innenwiderstand des Senders bzw. der Eingangswiderstand des Empfängers um vorzugsweise 15 – 25% des Längswiderstandes der Übertragungsleitung vermindert sind.

Auch eine durch Parallelschalten von Widerständen am Leitungseingang und/oder Leitungsausgang und/oder an den Verbindungspunkten von Leitungsabschnitten mit unterschiedlichem Widerstandsbelag erzeugte Verminderung des an diesen Stellen wirksamen Widerstandes um vorzugsweise 15 – 25% des Längswiderstandes des zu entzerrenden Leitungsabschnittes hat sich als vorteilhaft erwiesen.

Daneben hat es sich als günstig herausgestellt, den Frequenzgang der zu entzerrenden Leitungsdämpfung durch einen gleichartigen Frequenzgang der Verstärkung von Sender und/oder Zwischenverstärker(n) und/oder Empfänger aufzuheben oder aber den Frequenzgang der zu entzerrenden Leitungsdämpfung durch einen gegenläufigen Frequenzgang eines Zusatzdämpfungsgliedes in Sender und/oder Zwischenverstärker(n) und/oder Empfänger auszugleichen. Auch eine Kombination der genannten Maßnahmen kann gewählt werden.

Durch eine bewußte negative Reflexion am Leitungseingang wird aus den rücklaufenden Teilwellen, aus denen durch erneute (positive) Reflexion am Leitungslängswiderstand das zum Leitungsausgang (Empfängereingang) laufende Störsignal entsteht, ein Korrektursignal gebildet, das am Leitungsausgang das Störsignal aufgrund seiner umgekehrten Polarität möglichst weitgehend kompensiert.

Selbstverständlich läßt sich ein Korrektursignal auch durch eine passend gewählte negative Reflexion am Empfängereingang erzeugen. In diesem Fall wird zunächst am Leitungsausgang durch einen zu kleinen Empfängereingangswiderstand ein rücklaufendes negatives Signal erzeugt, aus dem dann durch die positive Reflexion am Leitungslängswiderstand das eigentliche Korrektursignal gebildet wird, das das durch zweifache positive Reflexion der Hauptwelle am Leitungslängswiderstand erzeugte Störsignal im wesentlichen ausgleicht.

Nur der Vollständigkeit halber sei erwähnt, daß auch eine Kombination beider Verfahren möglich ist, d. h. die Kompensation des Störsignals durch zwei Korrektursignale, von denen das eine durch negative Reflexion am Leitungseingang und das andere durch negative Reflexion am Leitungsausgang erzeugt wurde.

Wird eine homogene Leitung vorausgesetzt, so sind beide Korrektursignale durchaus gleichwertig. Während jedoch die Verringerung des Senderinnenwiderstandes am Leitungseingang einen Teil der durch die Spannungsteilung zwischen Leitungslängswiderstand und Empfängereingangswiderstand bewirkten Grunddämpfung der Übertragungsstrecke aufhebt, wird durch eine Verminderung des Empfängereingangswiderstandes am Leitungsausgang die Grunddämpfung noch vergrößert. Aus diesem Grunde kommt bestenfalls eine Kombination beider Möglichkeiten in Betracht. Eine alleinige Verringerung des Empfängereingangswiderstandes erscheint hingegen wegen der damit verbundenen relativ starken Vergrößerung der Grunddämpfung wenig sinnvoll.

Die zur Verfügung stehenden Übertragungsleitungen unterscheiden sich in der Praxis häufig sehr stark. Entsprechend variieren auch ihre Widerstandsbeläge. Eine relativ kurze Leitung mit großem Widerstandsbelag erzeugt ein Störsignal, das ebenso groß ist, wie das einer verhältnismäßig langen Leitung mit geringem Widerstandsbelag. Die Dauer des Störsignals, dessen Größe nur von einer Größe des gesamten Längswiderstandes der Übertragungsleitungen abhängt, ist allerdings von der Leitungslänge abhängig, so daß dieses Störsignal im Falle der langen Leitung mit geringem Widerstandsbelag ebenfalls relativ lange andauert.

Der große Vorteil der Kompensation von Reflexionsverzerrungen durch passend gewählte negative Reflexionen ist, daß die zeitliche Länge sowohl des Störsignals als auch des Kompensationssignals durch die Leitungslänge bestimmt werden. Das Korrektursignal hat damit automatisch die gleiche Länge wie das Störsignal.

Die Kompensation von Reflexionsverzerrungen, die durch doppelte Reflexion einer Hauptwelle am Leitungslängswiderstand entstehen, durch Kompensationssignale, die ihrerseits durch passend gewählte negative Reflexionen bewußt erzeugt werden, ist nicht nur bei Übertragungsleitungen möglich, die in ihrem gesamten Verlauf gleichmäßig aufgebaut sind. Auch bei Zusammenschaltung von Leitungen mit stark unterschiedlichen Aderdurchmessern ist eine solche Kompensation möglich. In einem solchen Fall muß jeder Leitungsabschnitt für sich kompensiert werden. Dabei kann davon ausgegangen werden, daß der »Innenwiderstand« des jeweils vorgeschalteten Leitungsstücks in erster Annäherung ebenso groß wie sein Wellenwiderstand ist und daß somit z. B. durch passend gewählte Parallelwiderstände an den Verbindungspunkten von zwei Leitungsabschnitten mit unterschiedlichem Widerstandsbelag eine Kompensation erreicht werden kann. Dieses Verfahren stellt aber nur eine Behelfslösung dar; hier hat sich der Einsatz von Zwischenverstärkern als vorteilhafter erwiesen, die in jedem Fall eine einwandfreie Trennung von stark unterschiedlichen Leitungsabschnitten gewährleisten.

## Patentansprüche

1. Verfahren zur verzerrungsarmen Übertragung breitbandiger Signale über symmetrische oder unsymmetrische Leitungen, dadurch gekennzeichnet, daß die durch doppelte Reflexion am Leitungslängswiderstand auf der Leitung zwischen Sender und Empfänger hervorgerufenen Teilwellen durch Erniedrigung des Querwiderstandes der Leitung an bestimmten Stellen und dadurch hervorgerufene gegenphasige Teilwellen praktisch vollständig kompensiert werden.

2. Verfahren nach Anspruch 1, dadurch gekennzeichnet, daß die gegenphasigen Teilwellen durch eine entsprechend gewählte negative Reflexion der ersten rücklaufenden Teilwellen am Senderinnenwiderstand erzeugt werden.

3. Verfahren nach Anspruch 1, dadurch gekennzeichnet, daß die gegenphasigen Teilwellen durch eine entsprechend gewählte negative Reflexion der Hauptwelle am Empfängereingangswiderstand mit anschließender positiver Reflexion am Leitungslängswiderstand erzeugt werden.

4. Verfahren nach Anspruch 1 bis 3, dadurch gekennzeichnet, daß die gegenphasigen Teilwellen durch eine Kombination von negativen Reflexionen am Senderinnenwiderstand und Empfängereingangswiderstand erzeugt werden.

5. Verfahren nach Anspruch 1 bis 4, dadurch gekennzeichnet, daß die gegenphasigen Teilwellen, insbesondere bei der Zusammenschaltung von Leitungsabschnitten mit unterschiedlichem Widerstandsbelag, durch passend gewählte negative Reflexionen erzeugt werden, die ihrerseits am Leitungseingang und/oder Leitungsausgang und/oder an den Verbindungspunkten der einzelnen Leitungsabschnitte erzeugt werden.

6. Verfahren nach einem der Ansprüche 1, 2, 4 oder 5, dadurch gekennzeichnet, daß der Innenwiderstand des Senders um 15−25% des Längswiderstandes der Übertragungsleitung vermindert wird.

7. Verfahren nach Anspruch 1, 3, 4, 5 oder 6, dadurch gekennzeichnet, daß der Eingangswiderstand des Empfängers um 15−25% des Längswiderstandes der Übertragungsleitung vermindert wird.

8. Verfahren nach einem der Ansprüche 1 bis 7, dadurch gekennzeichnet, daß durch Parallelschalten von Widerständen am Leitungseingang und/oder Leitungsausgang und/oder an den Verbindungspunkten von Leitungsabschnitten mit unterschiedlichem Widerstandsbelag eine Verminderung des an diesen Stellen wirksamen Widerstandes um 15−25% des Längswiderstandes des zu entzerrenden Leitungsabschnitts bewirkt wird.

9. Verfahren nach einem der Ansprüche 1 bis 8, dadurch gekennzeichnet, daß der Frequenzgang der zu entzerrenden Leitungsdämpfung durch einen gleichartigen Frequenzgang der Verstärkung von Sender und/oder Zwischenverstärker(n) und/oder Empfänger ausgeglichen wird.

10. Verfahren nach einem der Ansprüche 1 bis 8, dadurch gekennzeichnet, daß der Frequenzgang der zu entzerrenden Leitungsdämpfung durch einen gegenläufigen Frequenzgang eines Zusatzdämpfungsgliedes in Sender und/oder Zwischenverstärker(n) und/oder Empfänger ausgeglichen wird.

11. Verfahren nach einem der Ansprüche 9 und 10, gekennzeichnet durch eine Kombination von frequenzabhängiger Verstärkung und frequenzabhängiger Dämpfung.

## Claims

1. A method of transmitting low distortion side band signals over symmetrical or asymmetrical lines, characterised in that, the partial waves produced on the line between transmitter and receiver by double reflection at the longitudinal line resistance are compensated practically completly by reducing the transverse resistance of the line at determined positions and inversely phased partial waves produced thereby.

2. A method according to claim 1, characterised in that, the inversely phased partial waves are generated by an appropriately selected negative reflection of the first returning partial wave at the transmitter internal impedance.

3. A method according to claim 1, characterised in that, the inversely phased partial waves are generated by an appropriately selected negative reflection of the main wave at the receiver input impedance with a subsequent positive reflection at the longitudinal line resistance.

4. A method according to claims 1 to 3, characterised in that, the inversely phased partial waves are generated by a combination of negative reflections at the transmitter internal impedance and receiver input impedance.

5. A method according to claim 1 to 4, characterised in that, especially by interconnecting line sections with different resistance characteristics, the inversely phased partial waves are generated by matching selected negative relections which, in their turn, are generated at the line input and/or line output and/or at the interconnection points of the individual line sections.

6. A method according to one of claims 1, 2, 4 or 5, characterised in that, the internal impedance of the transmitter is reduced by 15−25% of the longitudinal resistance of the transmission line.

7. A method according to claim 1, 3, 4, 5 or 6, characterised in that, the input impedance of the receiver is reduced by 15 — 25% of the longitudinal resistance of the transmission line.

8. A method according to one of claims 1 to 7, characterised in that, by connecting resistances in parallel at the line input and/or line output and/or at the interconnection points of the line sections with different resistance characteristics, a reduction of the effective resistance by 15 — 25% of the longitudinal resistance of the line section to be connected is produced at those positions.

9. A method according to one of claims 1 to 8, characterised in that, the frequency response of the line damping to be connected is equalised by a similar frequency response of the amplification of the transmitter and/or intermediate amplifier(s) and/or receiver.

10. A method according to one of claims 1 to 8, characterised in that, the frequency response of the line damping to be connected is equalised by a frequency response in the opposite sense of an additional damping device in the transmitter and/or intermediate amplifier(s) and/or receiver.

11. A method according to one of claims 9 and 10, characterised by a combination of frequency dependent amplification and frequency dependent damping.

**Revendications**

1. Procédé de transmission à faible distorsion de signaux à large bande sur des lignes symétriques ou assymétriques, caractérisé en ce que les ondes partielles engendrées sur la ligne entre l'émetteur et le récepteur par double réflexion sur la résistance longitudinale de la ligne sont pratiquement totalement compensées par une diminution de la résistance transversale de la ligne en des points déterminés et par les ondes partielles de phase opposée qui résultent de cette diminution.

2. Procédé suivant la revendication 1, caractérisée en ce que lesdites ondes partielles de phase opposée sont produites en déterminant une réflexion négative convenablement choisie de la première onde partielle circulant en sens inverse sur la résistance interne de l'émetteur.

3. Procédé suivant la revendication 1, caractérisé en ce que lesdites ondes partielles de phase opposée sont produites en déterminant une réflexion négative convenablement choisie de l'onde principale sur la résistance d'entrée du récepteur, suivie d'une réflexion positive sur la résistance longitudinale de la ligne.

4. Procédé suivant les revendications 1 à 3, caractérisé en ce que lesdites ondes partielles de phase opposée sont produites par une combinaison de réflexions négatives sur la résistance interne de l'émetteur et sur la résistance d'entrée du récepteur.

5. Procédé suivant les revendications 1 à 4, caractérisé en ce que, notamment dans le cas d'interconnexion de segments de ligne possédant des résistances spécifiques différentes, lesdites ondes partielles de phase opposée sont produites par des réflexions négatives judicieusement choisies qui, de leur côté, sont produites sur l'entrée de la ligne et/ou sur la sortie de la ligne et/ou sur les points de jonction des différents segments de la ligne.

6. Procédé suivant l'une des revendications 1, 2, 4 et 5, caractérisé en ce qu'on diminue la résistance interne de l'émetteur de 15 à 25% de la résistance longitudinale de la ligne de transmission.

7. Procédé suivant les revendications 1, 3, 4, 5 ou 6, caractérisé en ce qu'on diminue la résistance d'entrée du récepteur d'une valeur de 15 à 25% de la résistance longitudinale de la ligne de transmission.

8. Procédé suivant l'une des revendications 1 à 7, caractérisé en ce que, en connectant des résistances en parallèle à l'entrée de la ligne et/ou à la sortie de la ligne et/ou aux points de jonction de segments de ligne qui possèdent des résistances spécifiques différentes, on détermine une réduction de la résistance effective en ces endroits, qui est de 15 à 25% de la résistance longitudinale du segment de ligne à corriger.

9. Procédé suivant l'une des revendications 1 à 8, caractérisé en ce qu'on compense la caractéristique de fréquence de l'atténuation de ligne à corriger en déterminant une caractéristique de fréquence de même genre de l'amplification de l'émetteur et/ou ou du ou des amplificateur(s) intermédiaire(s) et/ou du récepteur.

10. Procédé suivant l'une des revendications 1 à 8, caractérisé en ce qu'on compense la caractéristique de fréquence de l'atténuation de ligne à corriger en déterminant une caractéristique de fréquence de sens opposé d'un organe atténuateur additionnel dans l'émetteur et/ou dans le ou les amplificateurs intermédiaires et/ou dans le récepteur.

11. Procédé suivant l'une des revendications 9 et 10, caractérisé par une combinaison d'amplification en fonction de la fréquence et d'atténuation en fonction de la fréquence.